(19) Europäisches Patentamt
European Patent Office
Office européen des brevets

(11) EP 2 205 698 B1

(12) FASCICULE DE BREVET EUROPEEN

(45) Date de publication et mention
de la délivrance du brevet:
**02.05.2012 Bulletin 2012/18**

(21) Numéro de dépôt: **08869414.6**

(22) Date de dépôt: **17.10.2008**

(51) Int Cl.:
***C10G 35/04*** *(2006.01)*

(86) Numéro de dépôt international:
**PCT/FR2008/001463**

(87) Numéro de publication internationale:
**WO 2009/087309 (16.07.2009 Gazette 2009/29)**

(54) **PROCEDE DE REGENERATION D'UN CATALYSEUR DE REFORMAGE**

VERFAHREN ZUR WIEDERHERSTELLUNG EINES WIEDERHERSTELLUNGSKATALYSATORS

METHOD FOR REGENERATING A REFORMING CATALYST

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **26.10.2007 FR 0707605**

(43) Date de publication de la demande:
**14.07.2010 Bulletin 2010/28**

(73) Titulaire: **IFP Energies nouvelles**
**92852 Rueil-Malmaison Cedex (FR)**

(72) Inventeurs:
• **DECOODT, Xavier**
**F-93100 Montreuil (FR)**
• **DURAND, Sébastien**
**F-78140 Véliz (FR)**
• **LE-GOFF, Pierre-Yves**
**75011 PARIS (FR)**
• **WERMESTER, Stéphane**
**F-78400 Chatou (FR)**

(56) Documents cités:
**EP-A- 0 378 482      EP-A- 0 710 502**
**US-B1- 6 461 992**

**Description**

L'invention concerne la régénération des catalyseurs de reformage et des catalyseurs de production d'hydrocarbures aromatiques.

D'une manière générale, ces catalyseurs sont utilisés pour la conversion d'hydrocarbures naphténiques ou paraffiniques, susceptibles de se transformer par déshydrocyclisation et/ou déshydrogénation, lors du reformage ou de la production d'hydrocarbures aromatiques (par exemple la production de benzène, toluène, ortho-, méta- ou paraxylènes). Ces hydrocarbures proviennent du fractionnement des pétroles bruts par distillation ou d'autres procédés de transformation.

Un des moyens pour augmenter les rendements de ces procédés de reformage ou de production d'aromatiques, est de diminuer les pressions opératoires auxquelles s'effectuent les différentes réactions intéressantes. Par exemple, il y a 30 ans les réactions de reformage s'effectuaient à 40 bars (avec 1 bar = 0,1MPa) Il y a 20 ans, à 15 bars. Aujourd'hui, il est courant de voir des réacteurs de reformage fonctionnant à des pressions inférieures à 10 bars, notamment comprises entre 3 et 8 bars.

Cependant, l'amélioration des réactions bénéfiques due à la baisse de pression s'accompagne d'une désactivation plus rapide du catalyseur par cokage. Le coke ou les précurseurs de coke sont des composés constitués essentiellement de carbone et d'hydrogène. Ils se déposent sur les sites actifs du catalyseur. Le rapport molaire H/C du coke formé et de ses précurseurs varie généralement entre 0,3 à 1,0. Les atomes de carbone et d'hydrogène forment généralement des structures poly-aromatiques condensées dont le degré d'organisation cristalline est variable en fonction de la nature du catalyseur et des conditions de fonctionnement des réacteurs. Bien que la sélectivité de transformation des hydrocarbures en coke soit très faible, les teneurs en coke et précurseurs de coke accumulés sur le catalyseur peuvent devenir importantes. Pour les unités à lit fixe, ces teneurs sont généralement comprises entre 2,0 et 35,0 % poids. Pour les unités à lit circulant, ces teneurs sont généralement inférieures à 10,0 % poids.

Le dépôt de coke, plus rapide à basse pression, nécessite une régénération également plus rapide du catalyseur. Les cycles de régénération actuels peuvent descendre jusqu'à 2 ou 3 jours.

<u>Art antérieur</u>

Les brevets EP0378482, EP0872276B et EP0872277B traitent de la régénération des catalyseurs de reformage. Il s'agit de procédés de régénération d'un catalyseur de reformage comprenant des étapes successives de combustion, d'oxychloration et de calcination.

Le procédé selon la présente invention comporte au moins deux lits de combustion A1 et A2 et se différencie notamment des procédés décrient dans ces deux brevets EP0872276B et EP0872277B par un recyclage d'une partie de l'effluent de la zone d'oxychloration via une soufflante (blower selon la terminologie anglo-saxonne) vers le dernier lit A2 de combustion.

<u>Résumé de l'invention</u>

L'invention concerne un procédé de régénération d'un catalyseur de production d'hydrocarbures aromatiques ou de reformage comprenant une étape de combustion dans une zone A comprenant au moins 2 lits A1 et A2, une étape d'oxychloration dans une zone B, une étape de calcination dans une zone C. Le gaz effluent de la zone d'oxychloration est recyclé en partie via au moins une section D de lavage vers l'entrée des lits A1 et A2. De plus, le gaz effluent de la zone B est recyclé en partie vers le lit de combustion A2 en passant par une soufflante mais sans passer par ladite section D de lavage.

<u>Description détaillée de l'invention</u>

Le catalyseur à régénérer comprend généralement un support, ledit support comprenant au moins un oxyde réfractaire et/ou une ou plusieurs zéolites. Il comprend au moins un métal noble, de préférence le platine et au moins un halogène. Il comprend éventuellement un ou plusieurs éléments additionnels sélectionnés dans le groupe constitué par les éléments du groupe IA, IIA, les lanthanides, les éléments du groupe IV A de préférence le silicium et/ou l'étain, les éléments du groupe IIIB, les éléments du groupe III A, de préférence l'indium, les éléments du groupe VA, de préférence le phosphore et les éléments du groupe VIIB, de préférence le rhénium (les numéro des groupes correspondent à la classification CAS dans CRC Handbook of Chemistry and Physics, éditeur CRC press, rédacteur en chef D.R. Lide , 81ème édition, 2000-2001).

Selon un mode préféré, le catalyseur comprend au moins du platine, du chlore et un support alumine.

Compte tenu du coût élevé du platine, il est important de disperser au mieux la phase métallique, c'est-à-dire d'augmenter la proportion de platine en contact avec la surface et les molécules à transformer. La surface métallique spécifique (surface exprimée par gramme de métal) doit être maximale afin d'obtenir le taux de conversion le plus élevé possible. Ainsi, une chute de l'accessibilité, équivalent à une augmentation de la taille des particules ou un regroupement des particules élémentaires, est fortement préjudiciable à la productivité de la réaction.

L'objectif est donc de minimiser la taille des particules au cours de la préparation et de maintenir cet état de dispersion élevé. La présence de chlore en quantité suffisante constitue une réponse à ce problème.

Les inventeurs ont ainsi mis en évidence que le recyclage d'une partie de l'effluent de la zone d'oxychloration via une soufflante (blower selon la terminologie anglo-saxonne) vers le dernier lit de combustion A2 apporte de l'agent chlorant sur le lit A2. Cet apport diminue ainsi l'élution du chlore et réduit la consommation en agent chlorant. Ce recyclage permet de réduire le frittage du platine et favorise par conséquent sa redispersion efficace lors de l'étape B d'oxychloration.

Cette amélioration de la redispersion est d'autant plus sensible que le catalyseur contient des teneurs croissantes en poison tel que le fer.

La zone A de combustion comprend au moins 2 lits de combustion A1 et A2, de préférence 2 lits A1 et A2. Lesdits lits sont de préférence mobiles et radiaux.

La zone B d'oxychloration comprend au moins un lit. Ces lits sont généralement mobiles. De préférence, lesdits lits sont aussi axiaux.

La zone C de calcination comprend au moins un lit. Ces lits sont généralement mobiles. De préférence, lesdits lits sont aussi axiaux.

Le lit de combustion A1

Dans le lit A1, le catalyseur est généralement traité sous une pression de 3 à 8 bars et à une température comprise entre 350 et 550°C par un gaz de combustion comprenant 0,01 à 1,3 % d'oxygène en volume et circulant à co-courant du catalyseur. Le gaz dans le lit A1 provient généralement du mélange d'une partie du gaz issu de la zone B d'oxychloration avec une partie du gaz issue du lit A2.

Deuxième lit de combustion A2

Dans le lit A2, le catalyseur est généralement traité sous une pression de 3 à 8 bars. Cette pression est en général sensiblement égale à celle qui règne dans le lit A1.

La température dans le lit A2 est généralement supérieure d'au moins 20°C à la température qui règne dans le lit A1.

La combustion dans le lit A2 a généralement lieu en présence du gaz ayant circulé à travers le lit A1 et en présence d'une partie de l'effluent provenant de la sortie de la zone d'oxychloration B. De plus, un gaz inerte d'appoint préférentiellement de l'azote, peut éventuellement être ajouté dans le lit A2. Par ailleurs, un air sec d'appoint peut éventuellement être ajouté dans le lit A2.

L'objectif est que le catalyseur soit au contact d'un gaz comprenant entre 0,01 à 1,3 % volume d'oxygène, ces gaz circulant à co-courant du catalyseur.

Zone d'oxychloration B

Dans la zone d'oxychloration B le catalyseur est généralement traité à contre-courant par un mélange d'un gaz comprenant de l'oxygène qui provient:

- en partie de la zone de calcination
- éventuellement en partie d'un appoint d'oxygène, de préférence sous forme d'air
- éventuellement en partie d'une fraction du gaz issue de la section de lavage et de la section éventuelle de séchage.

En outre, ce mélange de gaz alimentant la zone d'oxychloration comprend généralement un appoint en au moins un agent chlorant. De plus, ce mélange de gaz alimentant la zone d'oxychloration comprend généralement un appoint d'eau ou de précurseur d'eau.

Une partie du gaz issu de l'oxychloration est, via une soufflante, recirculé vers le lit A2.

Le ou les agents chlorant sont généralement sélectionnés dans le groupe constitué par le chlore, le chlorure d'hydrogène les hydrocarbures halogénés comprenant moins de 4 atomes de carbone et de 1 à 6 atomes de chlore.

Par exemple, il peut s'agir de $C_2Cl_4$, $CCl_4$ ou de tout agent chlorant connu dans ces procédés de régénération pour libérer du chlore. Ils sont introduits de préférence en mélange avec le gaz comprenant de l'oxygène.

Lorsque la zone d'oxychloration est composée de lits mobiles et axiaux, on l'introduit généralement dans la partie inférieure de la zone d'oxychloration pour qu'il s'écoule à contre-courant du catalyseur.

L'eau est généralement amenée sous forme liquide ou vapeur, de préférence sous forme vapeur. L'eau ou le précurseur d'eau peut généralement être amenée dans la zone d'oxychloration en mélange avec le gaz comprenant de l'oxygène.

Le rapport molaire $H_2O/HCl$ dans la zone B est généralement compris entre 1 et 50, de préférence entre 1 et 40, et de manière très préférée entre 1 et 30.

L'étape d'oxychloration se déroule en présence d'un gaz comprenant généralement moins de 40%, de préférence moins de 30%, de manière préférée moins de 21 % volume d'oxygène, de manière très préférée entre 4% et 21 % volume d'oxygène, de manière encore plus préférée entre 10% et 21 % volume d'oxygène et généralement au moins 50 ppm poids de chlore, à une température comprise généralement entre 350 et 600°C, de préférence entre 350 et 550°C, de manière plus préférée entre 450 et 550°C, de manière très préférée entre 490 et 550°C.

La pression dans cette zone est généralement de 3 à 8 bars pour les procédés en lit mobile, en particulier pour les procédés de reformage à faible pression. Le temps de séjour du catalyseur dans l'étape d'oxychloration est généralement inférieur à 3 heures, de préférence compris entre 30 minutes et 3 heures.

Dans une réalisation préférée des procédés en lit mobile, il est introduit dans la zone d'oxychloration, au moins un appoint en oxygène.

Dans une autre réalisation préférée des procédés en lit mobile, uniquement un agent chlorant et un précurseur d'eau sont introduits dans la zone d'oxychloration. L'oxygène présent dans la zone d'oxychloration provient alors du gaz provenant de la zone de calcination.

Dans un autre mode préféré de réalisation des procédés en lit mobile, le gaz alimentant la zone d'oxychloration résulte du mélange du gaz provenant de la zone de calcination, avec l'appoint du ou des agent(s) chlorant(s), avec l'appoint d'eau ou des précurseurs d'eau et avec le ou les gaz comprenant de l'oxygène introduits dans la zone d'oxychloration. Le ou les gaz comprenant de l'oxygène peuvent être une partie des gaz issus du dernier lit de combustion lavés, de préférence séchés et additionnés d'un appoint en oxygène ainsi que le gaz de recirculation d'une partie de l'effluent de la zone d'oxychloration via une soufflante vers la zone d'oxychloration.

Zone de calcination C

L'étape de calcination est réalisée dans la zone C dans laquelle le catalyseur est traité pendant 20 à 160 minutes à une température comprise entre 350 et 600°C sous une pression comprise entre 3 et 8 bars, par au moins un appoint en gaz comprenant de l'oxygène, de préférence un appoint en gaz comprenant de l'oxygène, de préférence de l'air sec, mélangé éventuellement avec une partie des gaz en provenance de la section de lavage et de la zone éventuelle de séchage. Le gaz d'alimentation de la zone de calcination ne comprend généralement pas plus de 1 % volume d'eau, de préférence pas plus de 0,1 % volume d'eau. Généralement, il comprend au plus 21 % volume d'oxygène.

Il circule généralement à contre-courant du catalyseur dans le cas des procédés à lit mobile avec zone de calcination axiale.

Selon une variante, le seul appoint en gaz comprenant de l'oxygène est réalisé en entrée de la zone de calcination.

Selon une variante, l'unique appoint en oxygène provient d'un appoint en air sec dans la zone de calcination.

Section D de lavage et section E de séchage

L'effluent gazeux du lit A2 est généralement envoyé, en mélange avec une partie des effluents gazeux de la zone B d'oxychloration, vers la section D de lavage. Une partie de l'effluent de cette section de lavage est purgée et l'autre partie est généralement envoyée vers une section de séchage E puis est généralement envoyée vers un compresseur. L'effluent du compresseur est généralement envoyé en partie vers les lits A1 et A2 de combustion et éventuellement en partie vers les zones d'oxychloration et de calcination.

Selon un mode préféré, le catalyseur est en lit mobile dans chacune des zones A, B et C.

Description des figures

La figure 1 illustre l'impact de l'injection de chlore sur le frittage du platine en fonction du temps.

La figure 2 représente un mode de réalisation de l'invention.

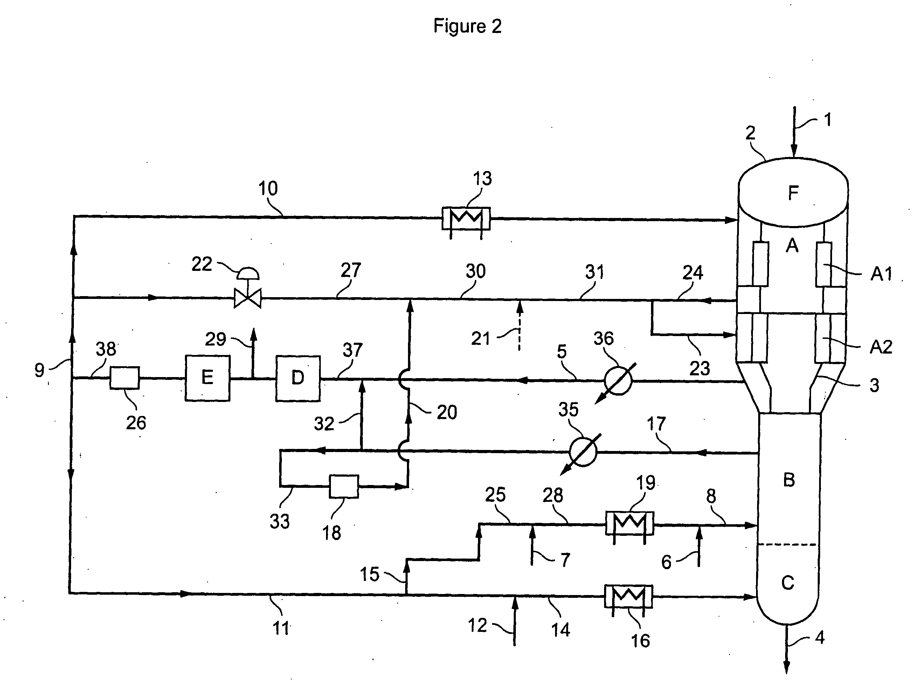

En ce qui concerne la figure 2, l'enceinte (2) comporte une zone A de combustion, une zone B d'oxychloration et une zone C de calcination. La zone de combustion A comporte deux lits de combustion A1 et A2.

Le catalyseur est introduit via la ligne 1 en tête de l'enceinte F et descend ensuite par gravité dans le lit de combustion A1 puis A2 puis via la ligne 3 du lit A2 vers la zone B d'oxychloration puis vers la zone C de calcination puis ressort de l'enceinte via la ligne 4.

Le lit A1 comporte une entrée de gaz circulant via la ligne 10, et une sortie de gaz circulant via la ligne 24.

Le lit A2 comporte une entrée de gaz circulant via la ligne 23, et une sortie de gaz circulant via la ligne 5 puis via le refroidisseur 36.

La zone B comporte une entrée de gaz circulant via la ligne 8, et une sortie de gaz circulant via la ligne 17. De plus, un appoint d'agent chlorant circule via la ligne 6 en mélange avec le gaz circulant via la ligne 28 pour alimenter la zone d'oxychloration via la ligne 8. De plus, un appoint d'eau ou d'un précurseur d'eau circule via la ligne 7 et en mélange avec le gaz circulant via la ligne 25 circule via la ligne 28 puis par un four 19 pour être introduit en oxychloration via la ligne 8 en mélange avec l'appoint d'agent chlorant circulant via la ligne 6.

La zone C comporte une entrée de gaz circulant via la ligne 14.

Les différentes recirculation de gaz sont décrites à présents:

Recirculation 1

Une partie du gaz effluent de la zone B d'oxychloration circule via la ligne 17 puis est refroidie par le refroidisseur 35 puis circule via la ligne 33, puis par une soufflante 18, puis par la ligne 20 puis par la ligne 30 puis par la ligne 31 puis par la ligne 23.

Recirculation 2

Une partie du gaz effluent de la zone B d'oxychloration circule via la ligne 17 est refroidie par le refroidisseur 35 puis circule via la ligne 32 pour être mélangé avec le gaz issue du lit de combustion A2 qui circule via la ligne 5. Ce mélange passe par la section de lavage D via la ligne 37 puis est en partie purgé via la ligne 29 et pour l'autre partie envoyée à la section de séchage E puis au compresseur 26. L'effluent de la section de séchage E circule via la ligne 38 puis en partie via la ligne 9 puis en partie via la ligne 27 puis par une vanne 22 puis est envoyé au lit A2 via la ligne 30 puis la ligne 31 puis la ligne 23. L'autre partie du mélange de gaz circulant via la ligne 9 est envoyée via la ligne 10 à un four 13 puis est injectée au premier lit de combustion A1.

Recirculation 3

Le gaz effluent de A1 transit via la ligne 24 et est mélangé au gaz transitant via la ligne 31 pour alimenter le deuxième lit de combustion via la ligne 23. Le gaz circulant via la ligne 31 correspond au mélange du gaz circulant via la ligne 30 avec l'éventuel appoint 21 de gaz comprenant de l'oxygène.

Recirculation 4

Un appoint d'agent chlorant est injecté via la ligne 6 et est mélangé au gaz provenant de la ligne 28 pour être injecté via la ligne 8 à la zone d'oxychloration.

Recirculation 5

Le gaz circulant via la ligne 38 est recyclé en partie via la ligne 9 vers les lits de combustion A1 et A2 et en partie via la ligne 11 vers la zone de calcination et vers la zone d'oxychloration.

Une partie du gaz circulant via la ligne 11 est envoyée dans la zone B via la ligne 15 puis 25 puis 28 puis 8. Une autre partie peut être mélangée à l'appoint d'air sec circulant via la ligne 12, passée par le four 16 et être envoyée en calcination via la ligne 14.

Exemples

Exemple 1

Le schéma de la figure 2 correspond au schéma selon l'invention utilisé pour la simulation réalisée avec le logiciel Pro II.

La température des gaz injectée en entrée de la zone de calcination et en entrée de la zone d'oxychloration est de 510°C pour le schéma de base et le schéma selon l'invention.

Les débits des mélanges de gaz circulant via les différentes lignes sont indiqués dans le tableau 1.

Le schéma de base illustre le cas où la recirculation via la soufflante de l'effluent de la zone d'oxychloration vers l'entrée du deuxième lit de combustion n'est pas effectuée (Voir le débit nul des gaz circulant via les lignes 20 et 33). Le schéma selon l'invention illustre le cas où ce recyclage est réalisé.

Tableau 1: débits des gaz circulant via les différentes lignes

| Zone concernée | Lignes | schéma de base: débit des gaz (en kg/h) | schéma selon l'invention: débit des gaz (en kg/h) |
|---|---|---|---|
| 1er lit de combustion | Ligne 10 | 23 629 | 23 629 |
| 2ème lit de combustion | Ligne 23 | 27 452 | 27954 |
| | Ligne 27 | 2943 | 2797 |
| | Ligne 21 | 880 | 0 |
| | Ligne 20 | 0 | 1528 |
| Zone de calcination | Ligne 14 | 1 180 | 1 180 |
| | Ligne 12 | 469 | 1 348 |
| Gaz introduit en zone d'oxychloration | Ligne 8 | 1 180 | 1 180 |
| | Ligne 6 | 5,1 | 5,0 |
| | Ligne 7 | 9 | 10 |
| Effluent de la zone d'oxychloration | Ligne 17 | 2374 | 2356 |
| Soufflante | Ligne 33 | 0 | 1528 |

Dans le cas du schéma selon l'invention, 101 ppm volume d'HCl sont en sortie du second lit de combustion contre 78 ppm volume d'HCl pour le schéma de base.

Exemple 2

Des tests ont été réalisés dans un réacteur à lit fixe afin de caractériser l'influence de la présence de chlore dans le second lit de combustion. Ce test est en effet représentatif des conditions enregistrées dans le deuxième lit de combustion.

Pour cela, un catalyseur platine sur un support alumine chlorée dont la teneur en chlore initiale est de 1,1 % poids est testée sous atmosphère air avec 10.000 ppm d'eau, un débit de 2000 Nl/kg/h et à une température de 650°C. Le test est réalisé sur une durée de 60 heures.
Le chlore est injecté dans le réacteur afin d'avoir une teneur stable en chlore tout au long du test de 1,1 % poids (+/- 0,2% poids).

Compte tenu du coût élevé du platine, il est important de disperser au mieux la phase métallique, c'est-à-dire d'augmenter la proportion de platine en contact avec la surface et les molécules à transformer. La surface métallique spécifique (surface exprimée par gramme de métal) doit être maximale afin d'obtenir le taux de conversion le plus élevé possible. Ainsi, une chute de l'accessibilité, équivalent à une augmentation de la taille des particules ou un regroupement des particules élémentaires, est fortement préjudiciable à la productivité de la réaction. L'objectif est donc de minimiser la taille des particules au cours de la préparation et de maintenir cet état de dispersion élevé. La présence de chlore en quantité suffisante peut constituer une réponse à ce problème.

L'accessibilité au sens de la présente invention est la quantité de platine accessible à la charge à convertir par rapport à la quantité totale de platine présente sur le catalyseur. La diminution de l'accessibilité correspond à un frittage du platine.

La mesure de l'accessibilité du platine est effectuée par titrage $H_2$ $O_2$.

Le titrage $H_2/O_2$ consiste à mesurer le volume d'oxygène consommé par la réaction (1) après une étape de réduction sous hydrogène du catalyseur.

$$Pt_s\text{-}H + \tfrac{3}{4}\, O_2 \rightarrow Pt_s\text{-}O + \tfrac{1}{2}\, H_2O \qquad (1)$$

ou $Pt_s$ désigne les atomes superficiels de platine.

Le catalyseur est réduit sous hydrogène à 450°C puis, après une redescente sous hydrogène à température ambiante, des volumes connus d'oxygène sont injectés. La consommation oxygène est suivie par chromatographie, l'intégration des signaux permettant par différence avec le volume total injecté de connaître le volume oxygène consommé par la réaction (1). A l'aide des coefficients stoechiométriques de la réaction (1), la fraction de platine en surface ou accessibilité est déterminée par la relation:

$$D = \frac{4 VO_2 M_{Pt}}{3 V_M \cdot [\%Pt]}$$

avec:

- $M_{Pt}$: masse molaire du platine (195,09 g.mol$^{-1}$)
- $V_M$: volume molaire du gaz (24400 ml/mol) a 25°C
- $VO_2$: volume mesuré correspondant à la consommation oxygène
- % Pt: teneur pondérale en platine du catalyseur

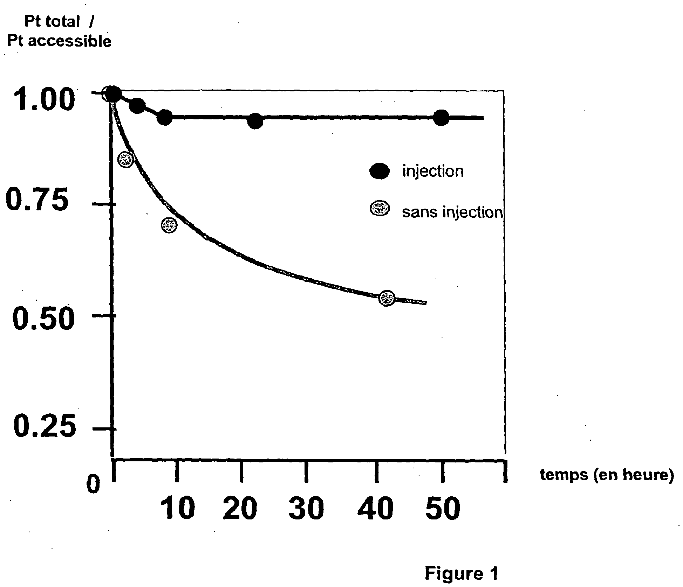

La figure 1 montre une accessibilité moindre au cours du temps donc un frittage plus important du platine sans injection de chlore.

La recirculation de l'effluent d'oxychloration en entrée du deuxième lit de combustion permet un apport de chlore et favorise ainsi le non-frittage du platine.

Ces résultats illustrent l'avantage du recyclage d'une partie de l'effluent de la zone d'oxychloration via une soufflante en partie vers le lit de combustion A2. Il apporte de l'agent chlorant sur le lit de combustion A2, diminuant ainsi l'élution du chlore. Il permet aussi de réduire de façon significative le frittage du platine et favorisent par conséquent sa redispersion efficace lors de l'étape d'oxychloration.

**Revendications**

1.  Procédé de régénération d'un catalyseur de production d'hydrocarbures aromatiques ou de reformage comprenant les étapes suivantes:

    - une étape a) de combustion dans une zone A de combustion comprenant au moins deux lits de combustion A1 et A2 en série,
    - une étape b) d'oxychloration dans une zone d'oxychloration B comprenant au moins un lit d'oxychloration, ladite zone d'oxychloration B étant alimentée au moins par un agent chlorant, au moins par de l'eau ou des précurseurs d'eau et au moins par un gaz comprenant de l'oxygène,
    - une étape c) de calcination dans une zone de calcination C comprenant au moins un lit de calcination, alimentée par un gaz comprenant au moins un appoint d'air sec, dans lequel:

        - ledit catalyseur comprend un support, du chlore et au moins un métal noble et circule en série dans les lits A1 puis A2, puis dans la zone d'oxychloration B puis dans la zone de calcination C
        - le gaz effluent du lit A1 est envoyé vers le lit A2,
        - le gaz alimentant la zone de calcination C circule librement vers la zone d'oxychloration B
        - au moins un appoint en gaz comprenant de l'oxygène est réalisé en entrée de la zone de calcination,
        - le gaz effluent de la zone d'oxychloration est recyclé en partie via au moins une section D de lavage vers l'entrée des lits de combustion A1 et A2,
        - le gaz effluent de la zone d'oxychloration est recyclé, en passant par une soufflante sans passer par ladite section D de lavage en partie au moins vers le lit de combustion A2
        - le gaz effluent du lit de combustion A2 est recyclé en partie via au moins ladite section D de lavage vers l'entrée des lits A1 et A2.

2.  Procédé selon la revendication 1 dans lequel dans la zone B d'oxychloration la température est comprise entre 350 et 600°C et le temps de séjour du catalyseur est compris entre 30 minutes et 3 heures.

3.  Procédé selon l'une des revendications précédentes dans lequel dans la zone B d'oxychloration, la teneur en oxygène du gaz au contact du catalyseur est comprise entre 4 et 21 % volume.

**4.** Procédé selon l'une des revendications précédentes dans lequel dans la zone C de calcination, le gaz comprend au plus 21 % volume d'oxygène et au plus 1 % volume d'eau.

**5.** Procédé selon l'une des revendications précédentes dans lequel le seul appoint en gaz comprenant de l'oxygène est réalisé en entrée de la zone de calcination.

**6.** Procédé selon l'une des revendications précédentes dans lequel l'agent chlorant est du chlore.

**7.** Procédé selon l'une des revendications 1 à 4 dans lequel le catalyseur est en lit mobile dans chacune des zones A, B et C.

**8.** Procédé selon l'une des revendications précédentes dans lequel l'unique appoint en oxygène provient d'un appoint en air sec dans la zone de calcination.

**9.** Procédé selon l'une des revendications précédentes dans lequel dans la zone C de calcination, la température est comprise entre 350 et 600°C et la pression est comprise entre 3 et 8 bars.

**Claims**

**1.** A process for regenerating a catalyst for the production of aromatic hydrocarbons or for reforming, comprising the following steps:

- a step a) for combustion in a combustion zone A comprising at least two combustion beds A I and A2 in series;
- a step b) for oxychlorination in an oxychlorination zone B comprising at least one oxychlorination bed, said oxychlorination zone B being supplied with at least one chlorinating agent, at least with water or water precursors and at least with an oxygen-containing gas;
- a step c) for calcining in a calcining zone C comprising at least one calcining bed supplied with a gas comprising at least a makeup of dry air;

in which:

- said catalyst comprises a support, chlorine and at least one noble metal and moves in scries in beds A1 then A2, then in the oxychlorination zone B then in the calcining zone C;
- the effluent gas from bed A1 is sent to bed A2;
- the gas supplying the calcining zone C moves freely towards the oxychlorination zone B;
- at least one makeup of oxygen-containing gas is made to the inlet to the calcining zone;
- a portion of the effluent gas from the oxychlorination zone is recycled via at least one scrubbing section D towards the inlet to combustion beds A1 and A2;
- at least a portion of the effluent gas from the oxychlorination zone is recycled, passing via a blower, without passing through said scrubbing section D, to the combustion bed A2;
- a portion of the effluent gas from combustion bed A2 is recycled via at least said scrubbing section D to the inlet to beds A1 and A2.

**2.** A process according to claim 1, in which in oxychlorination zone B, the temperature is in the range 350°C to 600°C and the residence time for the catalyst is in the range 30 minutes to 3 hours.

**3.** A process according to one of the preceding claims, in which in oxychlorination zone B, the quantity of oxygen in the gas in contact with the catalyst is in the range 4% to 21 % by volume.

**4.** A process according to one of the preceding claims, in which in the calcining zone C, the gas comprises at most 21% by volume of oxygen and at most 1% by volume of water.

**5.** A process according to one of the preceding claims, in which the only makeup of oxygen-containing gas is made to the inlet to the calcining zone.

**6.** A process according to one of the preceding claims, in which the chlorinating agent is chlorine.

**7.** A process according to one of claims 1 to 4, in which the catalyst is in a moving bed in each of zones A, B and C.

**8.** A process according to one of the preceding claims, in which the only makeup of oxygen derives from a makeup of dry air to the calcining zone.

**9.** A process according to one of the preceding claims, in which in calcining zone C, the temperature is in the range 350°C to 600°C and the pressure is in the range 3 to 8 bars.

**Patentansprüche**

**1.** Verfahren zur Regenerierung eines Katalysators zur Herstellung aromatischer Kohlenwasserstoffe oder zum Reforming, das die folgenden Schritte umfasst:

- einen Verbrennungsschritt a) in einem Verbrennungsbereich A, der mindestens zwei hintereinander angeordnete Verbrennungsbetten A1 und A2 umfasst,
- einen Oxychlorierungsschritt b) in einem Oxychlorierungsbereich B, der mindestens ein Oxychlorierungsbett umfasst, wobei der Oxychlorierungsbereich B mit mindestens einem Chlorierungsmittel, mindestens mit Wasser oder Wasser-Vorläufersubstanzen und mit mindestens einem sauerstoffhaltigen Gas gespeist wird,
- einen Brennschritt c) in einem Brennbereich C, der mindestens ein Brennbett umfasst und mit einem Gas gespeist wird, welches mindestens eine Zusatzmenge trockener Luft umfasst, wobei

- der Katalysator einen Träger, Chlor und mindestens ein Edelmetall umfasst und nacheinander durch die Betten A1 und A2 und anschließend in den Oxychlorierungsbereich B und dann in den Brennbereich C strömt
- das Gas, welches dem Bett A1 entströmt, in Richtung des Bettes A2 geleitet wird,
- das Gas, welches den Brennbereich C speist, ohne äußeren Zwang in Richtung des Oxychlorierungsbereichs B strömt
- mindestens eine zusätzliche Zufuhr an sauerstoffhaltigem Gas an der Eingangsöffnung des Brennbereichs erfolgt,
- das Gas, welches dem Oxychlorierungsbereich entströmt, über mindestens einen Waschabschnitt D teilweise in Richtung der Eingangsöffnung der Verbrennungsbetten A1 und A2 zurückgeführt wird
- das Gas, welches dem Oxychlorierungsbereich entströmt, über ein Gebläse mindestens teilweise in Richtung des Verbrennungsbetts A2 zurückgeführt wird, ohne durch den Waschbereich D zu strömen
- das Gas, welches dem Verbrennungsbett A2 entströmt, mindestens teilweise über den Waschabschnitt D in Richtung der Eingangsöffnung der Betten A1 und A2 zurückgeführt wird.

**2.** Verfahren nach Anspruch 1, wobei im Oxychlorierungsbereich B die Temperatur im Bereich von 350 bis 600 °C liegt und die Verweildauer des Katalysators im Bereich von 30 Minuten bis 3 Stunden liegt.

**3.** Verfahren nach einem der vorhergehenden Ansprüche, wobei im Oxychlorierungsbereich B der Sauerstoffgehalt des Gases, das mit dem Katalysator in Kontakt ist, im Bereich von 4 bis 21 Volumen-% liegt.

**4.** Verfahren nach einem der vorhergehenden Ansprüche, wobei im Brennbereich C das Gas höchstens 21 Volumen-% an Sauerstoff und höchstens 1 Volumen-% an Wasser umfasst.

**5.** Verfahren nach einem der vorhergehenden Ansprüche, wobei die einzige zusätzliche Zufuhr von sauerstoffhaltigem Gas an der Eingangsöffnung des Brennbereichs erfolgt.

**6.** Verfahren nach einem der vorhergehenden Ansprüche, wobei es sich bei dem Chlorierungsmittel um Chlor handelt.

**7.** Verfahren nach einem der Ansprüche 1 bis 4, wobei der Katalysator in jedem der Bereiche A, B und C als Fließbett vorliegt.

**8.** Verfahren nach einem der vorhergehenden Ansprüche, wobei die einzige zusätzliche Zufuhr von Sauerstoff aus der zusätzlichen Zufuhr von trockener Luft in den Brennbereich stammt.

**9.** Verfahren nach einem der vorhergehenden Ansprüche, wobei im Brennbereich C die Temperatur im Bereich von 350 bis 600 °C liegt und der Druck im Bereich von 3 bis 8 bar liegt.

Figure 1

Figure 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0378482 A
- EP 0872276 B
- EP 0872277 B

**Littérature non-brevet citée dans la description**

- CRC Handbook of Chemistry and Physics. CRC press, 2000